# EUROPEAN PATENT SPECIFICATION

(11) **EP 2 241 796 B1**
(45) Date of publication and mention of the grant of the patent: **31.08.2011**
(21) Application number: 09011124.6
(22) Date of filing: 31.08.2009
(51) Int. Cl.: F16M 11/28, F21V 21/14, F21V 21/22, F21V 21/28, F21W 131/10

(54) **Movable multi-directional light stand**
Beweglicher mehrdirektionaler Leuchtenständer
Pied de projecteur mobile multidirectionnel

(30) Priority: 17.04.2009 CN 200910038754
(43) Date of publication of application: 20.10.2010
(73) Proprietor: Liu, Yunzhao, Nantou Zhongshan Guangdong 528427 (CN)
(72) Inventor: Liu, Yunzhao, Nantou Zhongshan Guangdong 528427 (CN)
(74) Representative: Pereira Toña, Maria Irache

(56) References cited:
- US-A- 2 220 220
- US-A- 3 725 696
- US-A- 3 783 262
- US-A- 5 236 160
- US-A- 5 449 138
- US-B1- 7 073 926

## Description

### BACKGROUND OF THE INVENTION

### 1. Fields of the invention

The present invention relates to a movable multi-directional light stand, especially to an adjustable and retractable light stand that can rotate in a horizontal plane so as to light in different directions.

### 2. Descriptions of Related Art

Generally, while camping or working outdoors at night, an illumination device is used for lighting. Thus there is a plurality of outdoor illumination device with different designs available now. For example, a fixed floor light is one of them. Such light is inconvenient because it is unable to adjust the height of the light. Thus insufficient light is available or users need to adjust surrounding elements in use. This is extremely inconvenient and annoying for users.

In order to overcome above shortcomings, a foldable light stand is provided. The light stand is composed of a support base, a top support rod, a hollow middle support rod and a light rod disposed on the top support rod. The support base includes three support feet, a connection seat, a central support rod and a movable fastening sleeve. The three support feet are pivoted to the connection seat and the central support rod is assembled with a central hole of the connection seat. The hollow middle support rod is inserted into the central support rod. The central support rod and the middle support rod are assembled and disassembled with each other by a fastening nut. The top support rod is connected with the middle support rod and is able to be received in the middle support rod. The light rod is connected with the top support rod. The disadvantage of above design is in that the light rod is unable to rotate an angle in a plane vertically so that the height of the light is unable to be adjusted. Moreover, the light rod is unable to fold and this is inconvenient for storage.

Thus there is a need to provide a light stand without disadvantages mentioned above while with better lighting effect and higher practice value.

US 7073926 B1 discloses a movable multi-directional light stand comprising a middle support rod that is a hollow rod, a top support rod that is retractable and received in the middle support rod and is disposed with a mounting slot on a wall thereof along an axial direction, a retractable light rod having a hollow outer tube and an inner tube that slides in the outer tube while one end of the outer tube is in the mounting slot and pivoted to a wall of the top support rod.

### SUMMARY OF THE INVENTION

Therefore it is a primary object of the present invention to provide a movable multi-directional light stand that is adjustable and retractable. At the same time, the light stand can rotate in a horizontal plane so as to light various areas from different directions.

In order to achieve above object, the movable multi-directional light stand includes a retractable top support rod that can be received into and connected with a hollow middle support rod. A mounting slot is disposed on a wall of the top support rod, along an axial direction of the support rod. A sleeve with external threads is disposed around the top of the top support rod and is having a guiding slot corresponding to the mounting slot of the top support rod. A retractable light rod is pivoted to the wall of the top support rod that is disposed with the mounting slot. The retractable light rod consists of a hollow outer tube and an inner tube. The inner tube is having a hook and sliding in the outer tube. An adjustment nut has threads engaging corresponding external threads of the sleeve so as to support the outer tube, locate the retractable light rod in the mounting slot and adjust the height of the light.

The movable multi-directional light stand of the present invention further includes a top head nut with internal threads and a stud on the top of the top head nut. Thus the top head nut is disassembled or assembled with the sleeve by the internal threads engaging with the external threads. The stud matches a screw hole on one end of the top support rod.

The movable multi-directional light stand of the present invention is further disposed with a connection seat that has an axial through hole and external threads for fastening on the upper part thereof. The top end of the middle support inserts into the through hole and the bottom end of the top support rod inserts into the middle support rod. By the first fastening nut engaging the external threads for fastening, the middle support rod is connected with and fixed on the connection seat.

In the movable multi-directional light stand of the present invention, a locating hole is disposed on one end of the outer tube of the retractable light rod while the other end thereof is arranged with a second locating pin. The inner tube is disposed with a sliding slot for the second locating pin of the outer tube to slide therein while a third locating pin is arranged at one end of the inner tube that is mounted into the outer tube correspondingly. Thereby, the extension length of the retractable light rod can be adjusted.

Moreover, both the outer tube and the inner tube of the movable multi-directional light stand can be designed into a cone-shaped post so that the inner tube presses and leans against the outer tube tightly by the cone angle while being pulled out.

### BRIEF DESCRIPTION OF THE DRAWINGS

The structure and the technical means adopted by the present invention to achieve the above and other objects can be best understood by referring to the following detailed description of the preferred embodiments and the accompanying drawings, wherein
Fig. 1 is a perspective view of an embodiment according to the present invention;
Fig. 2 is a partial cross sectional view of an embodiment according to the present invention;
Fig. 3 is another partial cross sectional view of an embodiment according to the present invention;
Fig. 4 is a schematic drawing showing operation of a retractable light rod in an embodiment according to the present invention;
Fig. 5 is a schematic drawing showing operation of a retractable light rod in an embodiment according to the present invention;
Fig. 6 is a schematic drawing showing operation of an embodiment according to the present invention;
Fig. 7 is a schematic drawing showing operation of an embodiment according to the present invention;
Fig. 8 is a schematic drawing showing operation of an embodiment according to the present invention;
Fig. 9 is a partial enlarged view showing operation of an embodiment according to the present invention;
Fig. 10 is a schematic drawing showing an embodiment of the present invention being folded.

### DETAILED DESCRIPTION OF THE PREFERRED EMBODIMENT

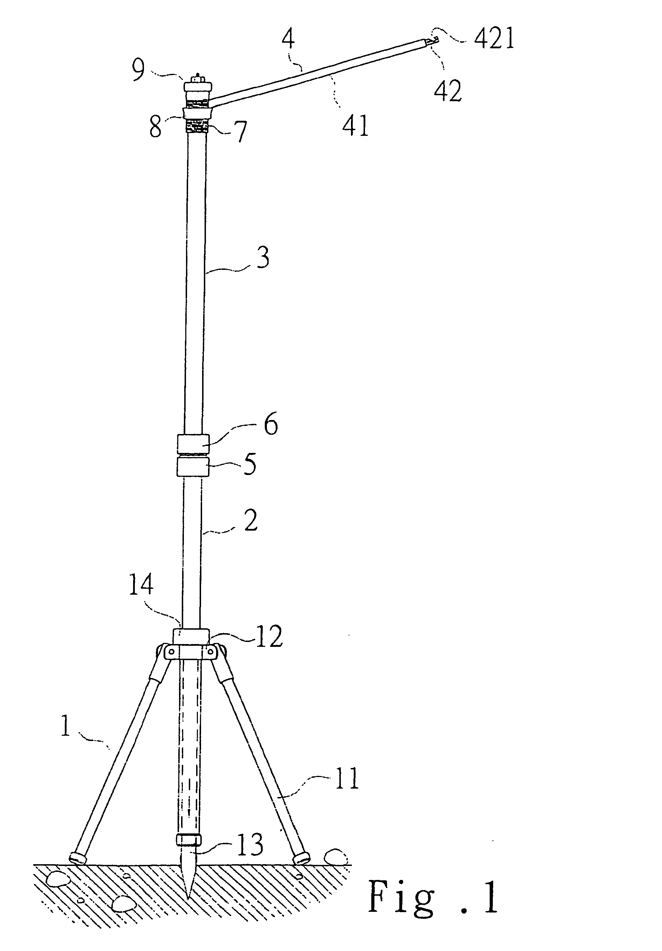

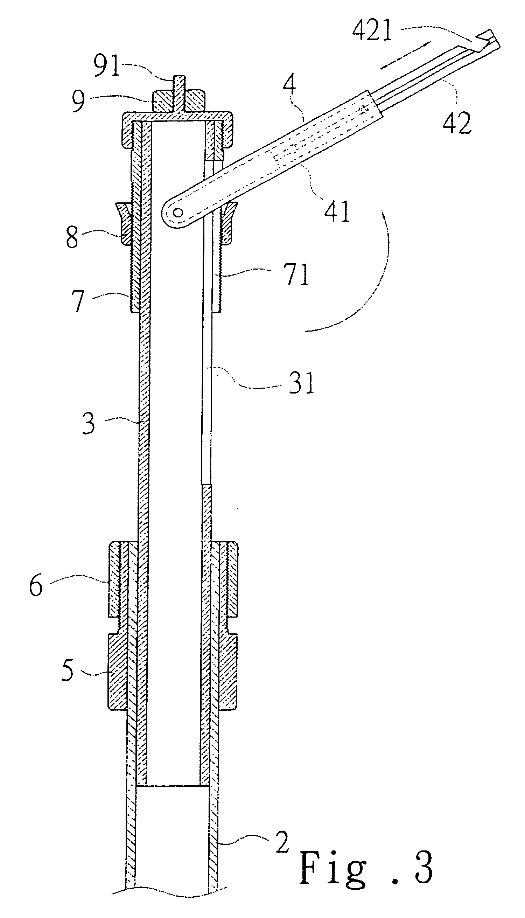

Refer from Fig. 1 to Fig. 3, a movable multi-directional light stand of the present invention includes: a support base (1), a middle support rod (2), a top support rod (3), a retractable light rod (4), a connection seat (5), a first fastening nut (6), a sleeve (7), an adjustment nut (8), and a top head nut (9).

The support base (1) is formed by a plurality of support feet (11), a pivot seat (12), a central support rod (13) and a second fastening nut (14). The support feet (11) are pivoted to the pivot seat (12) and the central support rod (13) is assembled with and located onto the pivot seat (12) while the second fastening nut (14) is disposed around the central support rod (13). The middle support rod (2) is correspondingly mounted into the central support rod (13). By the second fastening nut (14), the middle support rod (2) and the central support rod (13) are assembled and disassembled with each other. The top support rod (3) is a rod that can be retracted into or extended from the middle support rod (2) and is disposed with a mounting slot (31) on a wall thereof, along an axial direction. The retractable light rod (4) consists of a hollow outer tube (41) and an inner tube (42). The inner tube (42) is having a hook (421) and is sliding inside the outer tube (41). One end of the outer tube (41) is in the mounting slot (31), pivoted to the wall of the top support rod (3). A connection seat (5) with an axial through hole is disposed around the middle support rod (2). The upper part of the connection seat (5) is arranged with external threads for fastening. The first fastening nut (6) engages the external threads for fastening on the upper part of the connection seat (5) correspondingly. The sleeve (7) is a tube arranged with external threads so as to be disposed around the top of the top support rod (3). A guiding slot (71) corresponding to the mounting slot (31) of the top support rod (3) is arranged at the sleeve (7). The adjustment nut (8) is with threads adapted to engage the external threads of the sleeve (7) so as to support the retractable light rod (4) and locate the retractable light rod (4) in the mounting slot (31). The top head nut (9) is disposed with internal threads corresponding to the external threads of the sleeve (7) for disassembling or securing with each other. A stud (91) that matches one end of the top support rod (3) is arranged on the top of the top head nut (9).

From Fig. 1 to Fig. 7, while adjusting the angle between the retractable light rod (4) and the horizontal plane, the retractable light rod (4) is rotated counterclockwise. The adjustment nut (8) is also rotated to move forward for supporting the outer tube (41) of the retractable light rod (4). Thus one end of the retractable light rod (4) is moved upward and the light handing on the end thereof is moving away from the ground. When the retractable light rod (4) is rotated clockwise and the adjustment nut (8) is also rotated, the adjustment nut (8) is also rotated to move downward for supporting the outer tube (41) of the retractable light rod (4). And the end of the retractable light rod (4) is moving toward the ground. The height of the light hanging on the end of the retractable light rod (4) is reduced, more close to the ground.

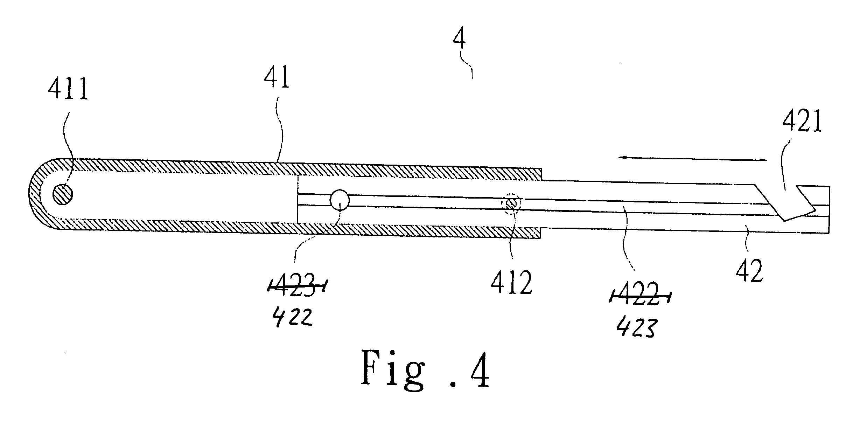

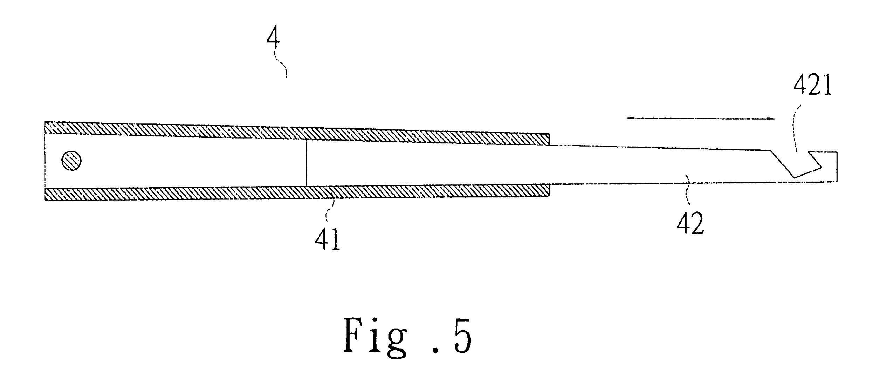

Refer to Fig. 4 & Fig. 5, the following shows the adjustment of the length of the retractable light rod (4). A locating hole (411) is disposed on one end of the outer tube (41) while the other end thereof is arranged with a second locating pin (412). The inner tube (42) is disposed with a sliding slot (423) for the second locating pin (412) of the outer tube (41) to slide therein. On one end of the inner tube (42) mounted into the outer tube (41) correspondingly, a third locating pin (422) is arranged at thereof. Thereby, the retractable light rod (4) is fixed on the wall of the top support rod (3) by the third locating pin (422) and the locating hole (411) of the outer tube (41). When the inner tube (42) is pulled out slidingly, the second locating pin (412) of the outer tube (41) moves along the sliding slot (423) of the inner tube (42). When the second locating pin (412) of the outer tube (41) and the third locating pin (422) of the inner tube (42) are against each other, the inner tube (42) achieves maximum extension position. The two second and third locating pins (412), (422) are set for length stop.

Moreover, both the outer tube (41) and the inner tube (42) can be designed into a cone-shaped post. By the cone angle, the inner tube (42) presses and leans against the outer tube (41) tightly while being pulled out, as shown in Fig. 5.

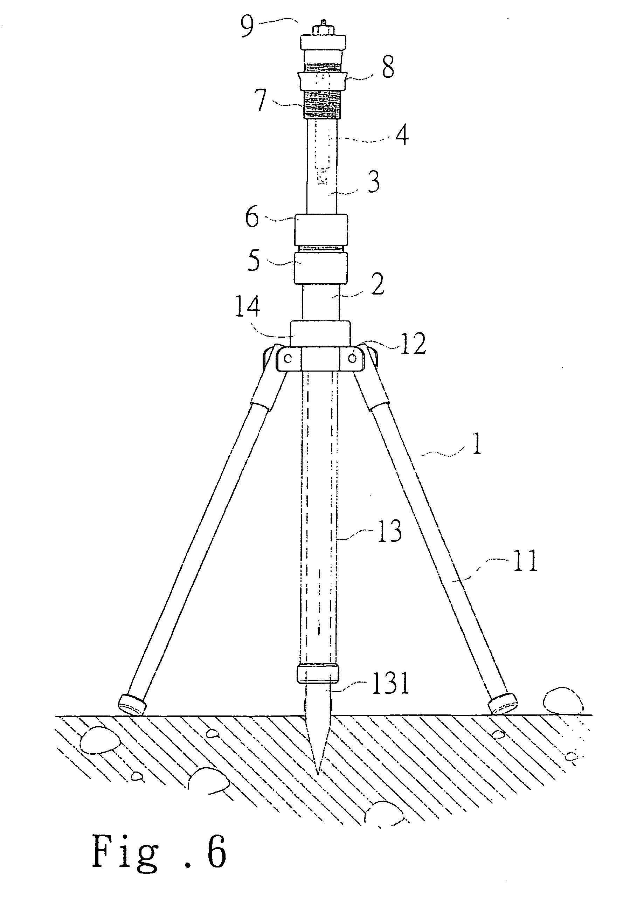

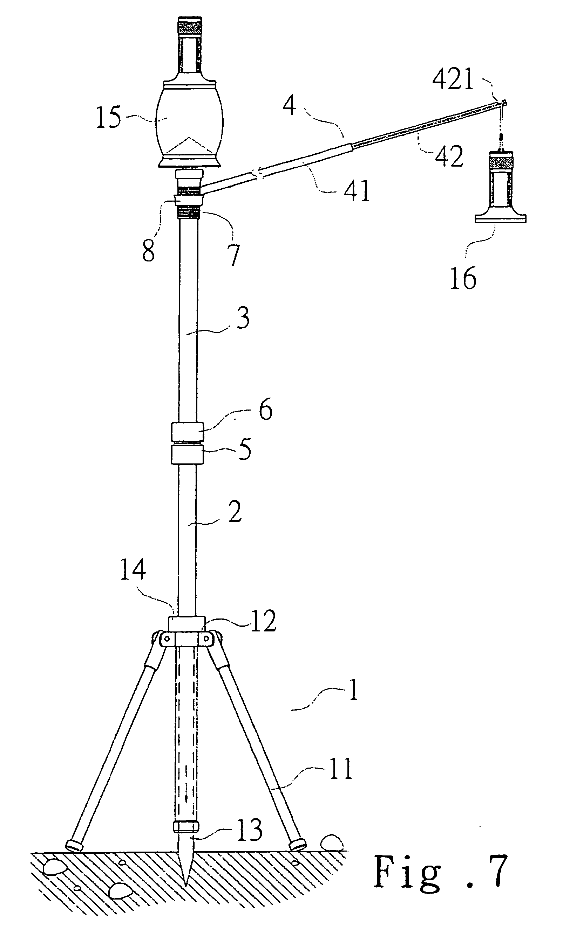

Refer to Fig. 6 and Fig. 7, in use, the support feet (11) is rotated and pulled away from the pivot seat (12) so as to contact the ground. Then rotate the second fastening nut (14) and pull the middle support rod (2) out of the central support rod (13). Next rotate the second fastening nut (14) tightly for locating the middle support rod (2). While camping outdoors, a first locating pin (131) is pulled out of the central support rod (13) and is inserted into the ground. When the device is used indoors, the first locating pin (131) is drawn from the central support rod (13). Then loose the first fastening nut (6) and pull the top support rod (3) out of the middle support rod (2). Next rotate the first fastening nut (6) tightly so as to fix the relative position of the top support rod (3). At last, install a light (15) above the top head nut (9), as shown in Fig. 7.

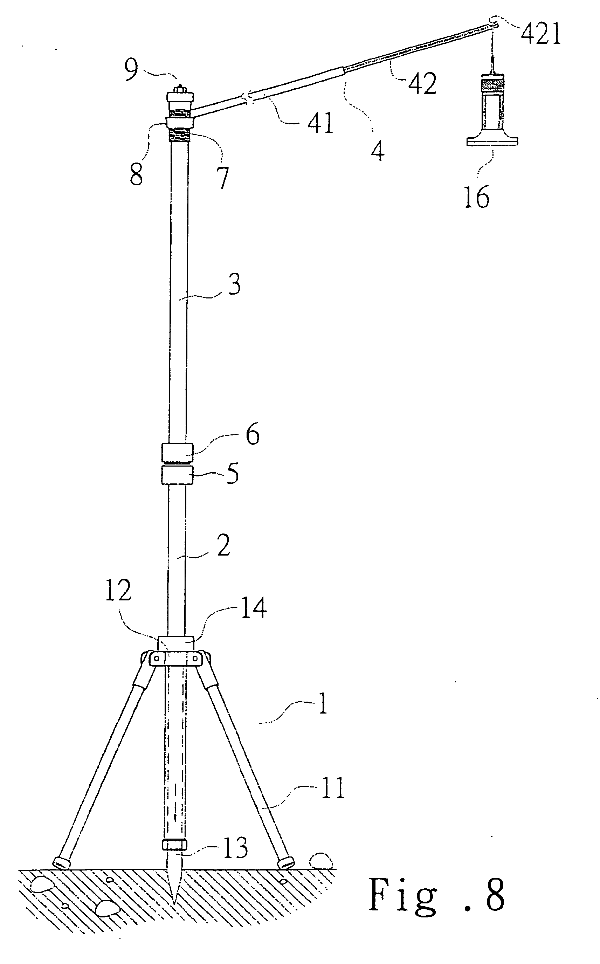

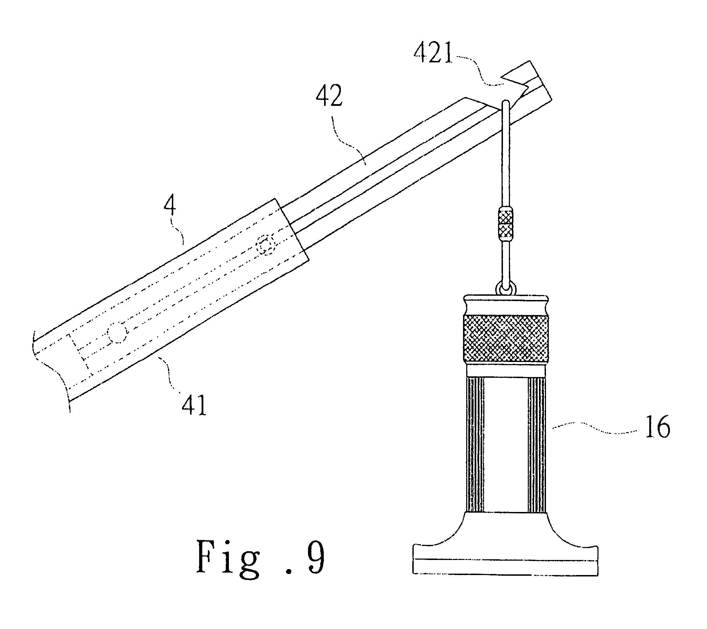

Refer to Fig. 8 and Fig. 9, rotate the adjustment nut (8) so as to separate from the sleeve (7) and move downwards. Then the retractable light rod (4) is pulled from the mounting slot (31) and is rotating around the top support rod (3). Next the adjustment nut (8) is rotated again to connect with the sleeve (7). Now the adjustment nut (8) supports the retractable light rod (4). The inner tube (42) is drawn from the outer tube (41) and a pendant light (16) is hanging on the hook (421) located on one end of the inner tube (42), as shown in Fig. 8.

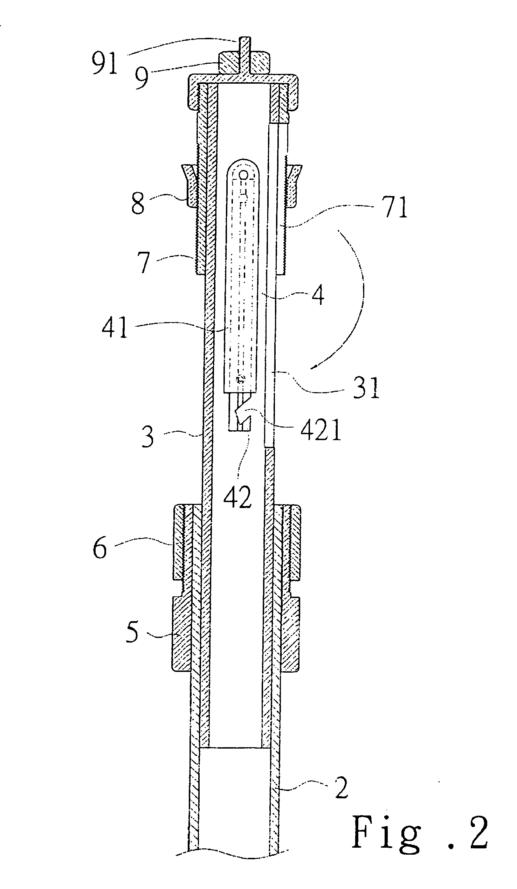

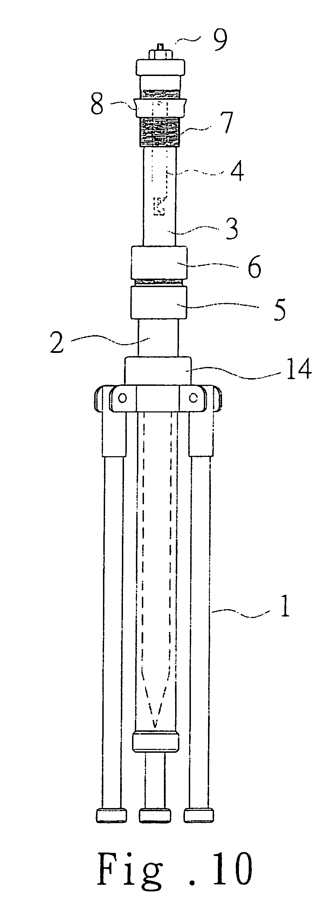

Refer to Fig. 10, for storage, the adjustment nut (8) is disassembled with the sleeve (7) and the inner tube (42) is received into the outer tube (41). As shown in Fig. 2, the retractable light rod (4) is rotated clockwise so as to be loaded into the mounting slot (31). The adjustment nut (8) is connected with the sleeve (7) to prevent the retractable light rod (4) from falling out of the mounting slot (31) due to external forces. Then the top support rod (3) is inserted into the middle support rod (2) and the middle support rod (2) is received into the central support rod (13) of the support base (1). At last, the support feet (11) are folded. The folding is finished.

## Claims

1. A movable multi-directional light stand comprising:
a middle support rod (2) that is a hollow rod,
a top support rod (3) that is retractable and received in the middle support rod (2) and is disposed with a mounting slot (31) on a wall thereof along an axial direction,
a retractable light rod (4) having a hollow outer tube (41) and an inner tube (42) that slides in the outer tube (41) and having a hook (421) while one end of the outer tube (41) is in the mounting slot (31) and pivoted to a wall of the top support rod (3),
a sleeve (7) that is arranged with external threads for being disposed on the top of the top support rod (3) and having a guiding slot (71) corresponding to the mounting slot (31) of the top support rod (3),
and an adjustment nut (8) that engages the external threads of the sleeve (7) so as to support the retractable light rod (4) correspondingly and locate the retractable light rod (4) in the mounting slot (31).

2. The light stand as claimed in claim 1, wherein the middle support rod (2) is mounted into a support base (1) formed by a plurality of support feet (11), a pivot seat (12), a central support rod (13) and a second fastening nut (14); the support feet (11) are pivoted to the pivot seat (12) and the central support rod (13) is assembled with and located onto the pivot seat (12) while the central support rod (13) and the middle support rod (2) are disassembled and assembled with each other by the second fastening nut (14).

3. The light stand as claimed in claim 1, wherein a connection seat (5) with an axial through hole is disposed around the middle support and an upper part of the connection seat (5) is disposed with external threads for fastening so as to fix the top support rod (3) mounted in the middle support rod (2) together with a first fastening nut (6).

4. The light stand as claimed in claim 1, wherein a top head nut (9) with internal threads is threaded with the external threads of the sleeve (7) correspondingly and a stud (91) that matches one end of the top support rod (3) is arranged on the top of the top head nut (9).

5. The light stand as claimed in claim 1, wherein one end of the outer tube (41) of the retractable light rod (4) is disposed with a locating hole (411) and the other end thereof is arranged with a second locating pin (412) while the inner tube (42) is disposed with a sliding slot (423) for the second locating pin (412) of the outer tube (41) to slide therein and a third locating pin (422) is arranged at one end of the inner tube (42) that is mounted into the outer tube (41) correspondingly.

6. The light stand as claimed in claim 1, wherein the outer tube (41) and the inner tube (42) of the retractable light rod (4) are cone-shaped posts that slide into each other.

## Patentansprüche

1. Eine bewegliche multi-schwenkbare Stehlampe, umfassend:
eine mittlere Haltestange(2), die eine hohl Stange ist,
eine obere Haltestange(3), die einfahrbar und in der mittleren Haltestange(2) gelagert ist, und mit einem Montageschlitz(31) an einer Wand entlang deren axialer Richtung angeordnet ist,
eine einfahrbare Lampestange (4) mit einem hohlen Außenrohr (41) und einem Innenrohr (42), das in dem Außenrohr (41) gleitet, und mit einem Haken (421), während ein Ende des Außenrohrs (41) an dem Montageschlitz (31) und schwenkbar an einer Wand des oberen Haltestange(3) ist,
eine Hülse (7) mit Außengewinde für Anbringen auf der Oberseite der oberen Haltestange (3) und mit einem Führungsschlitz (71) entsprechend der Montageschlitz (31) des oberen Haltestange (3), und eine Anpassungsmutter (8), die das Außengewinde der Hülse (7) eingreift, damit die einfahrbare Lampestange (4) entsprechend unterstützt wird und die einfahrbaren Lampestange (4) in dem Montageschlitz (31) platziert wird,

2. Die Stehlampe, wie in Anspruch 1 beansprucht, wobei die mittlere Haltestange (2) in eine Unterlage (1) montiert wird, die von Standfüßen (11), einer Pivotlage (12), einer zentralen Haltestange (13) und ein zweites Befestigungsmutter (14) gebildet, die Standfüße (11) schwenken rund um die Pivotlage (12) und die zentrale Haltestange (13) wird auf der Pivotlage (12) montiert, während die zentrale Haltestange (13) und mittlere Haltestange (2) miteinander durch die zweite Befestigungsmutter (14) demontiert und montiert werden.

3. Die Stehlampe, wie in Anspruch 1 beansprucht, wobei eine Verbindungslage (5) mit einer axialen Durchgangsbohrung rund um die mittlere Haltestange angeordnet wird, und einen oberen Teil der Verbindungslage (5) wird mit Außengewinde zur Befestigung angeordnet, damit die obere Haltestange (3) durch einer ersten Befestigungsmutter (6) in der mittlere Haltestange (2) angeordnet wird.

4. Die Stehlampe, wie in Anspruch 1 beansprucht, wobei eine Oberteilmutter (9) mit Innengewinde das Außengewinde der Hülse (7) entsprechend eingreift, und ein Bolzen (91), der ein Ende der oberen Haltestange (3) übereinstimmt, wird auf der Oberseite der Oberteilmutter (9) angeordnet.

5. Die Stehlampe, wie in Anspruch 1 beansprucht wobei ein Ende des Außenrohrs (41) der einfahrbaren Lampestange (4) mit einer Aufnahmebohrung (411) angeordnet wird und deren anderes Ende mit einem zweiten Fixierstift (412) angeordnet wird, während das Innenrohr (42) mit einem Schiebeschlitz (423) platziert wird, wo der zweite Fixierstift (412) des Außenrohrs (41) drin gleiten kann, und ein dritter Fixierstift (422) wird an einem Ende des Innenrohrs (A2) angeordnet, das in dem Außenrohr (41) montiert wird.

6. Die Stehlampe, wie in Anspruch 1 beansprucht, wobei das Außenrohr (41) und das Innenrohr (42) der einfahrbaren Lampestange (4) kegelförmige Stangen sind, die ineinander gleiten.

## Revendications

1. Un support de lampe amovible et multidirectionnel, qui comprend:
Une tige de support moyenne (2) qui est une tige creuse,
Une tige de support supérieure (3) qui est rétractable et reçue dans la tige de support moyenne(2) et est disposée avec un slot de montage (31) sur un mur le long de la direction axiale,
Une tige de lampe rétractable (4) ayant un tube extérieur (41) creux et un tube intérieur (42) qui glisse dans le tube extérieur (41) et ayant un croc (421), un bout du tube extérieur (41) est dans le slot de montage (31) pivoté au mur de la tige de support supérieur (3),
Une douille (7) qui est arrangée avec filetage extérieur pour être disposée sur le dessus de la tige de support supérieur (3) et ayant un slot de guidage (71) correspondant au slot de montage supérieur(31) de la tige de support supérieur(3),
Et un écrou d'ajustement (8) qui engage le filetage externe de la douille (7) afin de soutenir la tige de lampe rétractable (4) et localise la tige de lampe rétractable (4) dans le slot de montage (31).

2. Comme déclaré dans la revendication 1, c'est un support de lampe, et la tige de support moyenne (2) est montée dans la base de support (1) formée par un groupe de pieds de support (11), un siège pivotant (12), une tige de support central (13) et un écrou de fixation (14) ; le pied de support(11) est pivoté au siège pivotant (12) lorsque la tige de support centrale(13) est montée dans le siège pivotant (12), la tige de support centrale(13) et la tige de support moyenne (2) sont désassemblées et assemblées l'un à l'autre par l'écrou de fixation (14).

3. Comme déclaré dans la revendication 1, c'est un support de lampe, et un siège de connexion (5) avec un trou axiale est déposé autour de la tige du support moyenne et une partie supérieure du siège de connexion (5) est fixée avec le filetage externe afin de fixer la tige de support supérieure (3) montée dans la tige de support moyenne (2) avec un écrou de fixation (6).

4. Comme déclaré dans la revendication 1, c'est un support de lampe, et un écrou de tête supérieure (9) avec filetage interne engage le filetage externe de la douille (7) et un poteau (91) qui assortit un bout de la tige de support supérieure (3) est arrangé sur le dessus de l'écrou de tête supérieure (9).

5. Comme déclaré dans la revendication 1, c'est un support de lampe, et un bout du tube extérieur (41) de la tige de lampe rétractable (4) est fixé avec un trou de localisation (411) et l'autre bout est arrangé avec un seconde goupille de localisation (412) lorsque le tube intérieur (42) est fixé avec un slot de glissage (423) pour la seconde goupille de localisation (412) du tube extérieur (41) à glisser et un troisième goupille de localization (422) est arrangé à un bout du tube intérieur (42) qui est monté dans le tube extérieur(41).

6. Comme déclaré dans la revendication 1, c'est un support de lampe, et le tube externe (41) et le tube interne (42) de la tige de lampe rétractable (4) sont poteaux coniques qui glissent dans l'autre.
